# EUROPÄISCHE PATENTSCHRIFT

(11) **EP 2 797 770 B1**
(45) Veröffentlichungstag und Bekanntmachung des Hinweises auf die Patenterteilung: **09.01.2019**
(21) Anmeldenummer: 12784612.9
(22) Anmeldetag: 15.11.2012
(51) Int. Cl.: B60N 2/12, B60N 2/07, B60N 2/20

(54) **ENTRIEGELUNGSVORRICHTUNG FÜR EINEN FAHRZEUGSITZ MIT EINSTIEGSERLEICHTERUNGSFUNKTIONALITÄT UND VERFAHREN ZUM BETRIEB EINER ENTRIEGELUNGSVORRICHTUNG**
UNLOCKING DEVICE FOR VEHICLE SEAT WITH AN EASY-ENTRY FUNCTIONALITY AND METHOD FOR OPERATING AN UNLOCKING DEVICE
DISPOSITIF DE DÉVERROUILLAGE POUR SIÈGES DE VÉHICULE AVEC FONCTIONNALITÉ POUR FACILITER L'ENTRÉE ET PROCÉDÉ DE FONCTIONNEMENT D'UN DISPOSITIF DE DÉVERROUILLAGE

(30) Priorität: 28.12.2011 DE 102011090055; 03.04.2012 DE 102012205485
(43) Veröffentlichungstag der Anmeldung: 05.11.2014
(73) Patentinhaber: Adient Luxembourg Holding S.à r.l., 1855 Luxembourg (LU)
(72) Erfinder: SCHUMANN, Kai, 66509 Rieschweiler (DE); TEUFEL, Ingo, 67806 Rockenhausen (DE)
(74) Vertreter: Finger, Catrin
(86) Internationale Anmeldenummer: PCT/EP2012/072751
(87) Internationale Veröffentlichungsnummer: WO 2013/097979

(56) Entgegenhaltungen:
- DE-A1-102004 017 491
- FR-A1- 2 710 011
- JP-A- 55 091 426

## Beschreibung

Die Erfindung betrifft eine Entriegelungsvorrichtung für einen Fahrzeugsitz mit Einstiegserleichterungsfunktionalität gemäß dem Oberbegriff des Anspruchs 1. Weiterhin betrifft die Erfindung ein Verfahren zum Betrieb einer solchen Entriegelungsvorrichtung gemäß dem Oberbegriff des Anspruchs 8.

Die DE 10 2004 002 728 B3 beschreibt einen Fahrzeugsitz, mit einem Sitzrahmen mit auf fahrzeugfesten Unterschienen in Längsrichtung verstellbaren Oberschienen und einer an einem sitzrahmenfesten Bauteil über Neigungsversteller arretierten Rückenlehne, wobei der Fahrzeugsitz von einer Gebrauchsposition in eine Easy-Entry-Position verstellbar ist durch Vorklappen der Rückenlehne in eine teilweise vorgeklappte Stellung und Längsverstellen des Sitzrahmens aus einem Gebrauchsbereich nach vorne in einen Easy-Entry-Bereich. Dabei ist vorgesehen, dass die Rückenlehne eine Rastung für ihre teilweise vorgeklappte Stellung aufweist, an dem Sitzrahmen ein Einrastmechanismus vorgesehen ist, der in Abhängigkeit der Längsposition des Sitzrahmens selbsttätig verstellbar ist und in dem hinteren Gebrauchsbereich eine Freigabestellung und in dem vorderen Easy-Entry-Bereich eine Einraststellung einnimmt, in der er mit der Rastung der Rückenlehne verrastet und aus der Rastung nur durch eine Verstellung des Sitzrahmens nach hinten aus dem Easy-Entry-Bereich in den Gebrauchsbereich lösbar ist.
In der JP 55 091426 A und der FR 2 710 011 A1 werden Verstellmechanismen für Fahrzeugsitze mit einer Einstiegserleichterungsfunktionalität beschrieben, welche derart ausgebildet ist, dass eine Längsverstellung des Fahrzeugsitzes erst blockiert wird, wenn der Fahrzeugsitz aus einer Einstiegserleichterungsposition heraus wieder zurück in eine normale Sitzposition verschoben ist.
Aufgabe der vorliegenden Erfindung ist es, eine gegenüber dem Stand der Technik verbesserte Entriegelungsvorrichtung für einen Fahrzeugsitz mit Einstiegserleichterungsfunktionalität und ein verbessertes Verfahren zum Betrieb einer solchen Entriegelungsvorrichtung anzugeben.
Hinsichtlich der Entriegelungsvorrichtung für einen Fahrzeugsitz mit Einstiegserleichterungsfunktionalität wird die Aufgabe durch die im Anspruch 1 angegebenen Merkmale gelöst.
Hinsichtlich des Verfahrens zum Betrieb einer Entriegelungsvorrichtung wird die Aufgabe durch die im Anspruch 8 angegebenen Merkmale gelöst. Vorteilhafte Weiterbildungen der Erfindung sind Gegenstand der Unteransprüche.
Eine Entriegelungsvorrichtung für einen Fahrzeugsitz mit Einstiegserleichterungsfunktionalität umfasst ein bügelartiges Element und eine Führungsleiste, wobei die Führungsleiste mittels zumindest eines Befestigungsmittels an einer Unterschiene eines Schienensystems zur Sitzlängsverstellung angeordnet ist und das bügelartige Element mit einem Auslösebügel der Einstiegserleichterungsfunktionalität gekoppelt ist.
Im Verlauf einer Betätigung der Einstiegserleichterungsfunktionalität bildet das bügelartige Element zumindest abschnittsweise einen form- und/oder kraftschlüssigen Eingriff mit der Führungsleiste derart aus, dass der Auslösebügel der Einstiegserleichterungsfunktionalität entgegen einer diesem zugeordneten Rückstellfeder in einer entriegelten Position gehalten ist.

Mittels einer erfindungsgemäßen Entriegelungsvorrichtung ist eine Entriegelung des Schienensystems unabhängig von einer Lehnenposition ermöglicht. Dabei ist diese Entriegelung vorteilhafterweise an oder im Schienensystem integriert und von einer Position von Oberschiene zu Unterschiene abhängig.

Besonders vorteilhafterweise ist eine solche Entriegelung mittels weniger Bauteile realisierbar.

Die Führungsleiste ist bevorzugt als mehrfach abgewinkeltes und abschnittsweise korrespondierend zur Unterschiene ausgeformtes Blechprägeteil ausgebildet. Ein solches Bauteil ist besonders einfach und preiswert insbesondere in einer Großserienproduktion herstellbar.

Die Führungsleiste weist vorteilhafterweise zumindest einen Führungsabschnitt auf, welcher von einer Seitenfläche der Unterschiene abgewinkelt an selbiger angeordnet ist.

Besonders bevorzugt ist ein erstes Ende des Führungsabschnitts verrundet ausgebildet. Dies verringert eine Verletzungsgefahr für einen Fahrzeugnutzer und ermöglicht einen sicheren und verschleißminimierten Eingriff zwischen bügelartigem Element und Führungsleiste.

In einer besonders vorteilhaften Ausführungsform weist das bügelartige Element einen zumindest abschnittsweise u-förmigen Querschnitt auf, wobei ein erster Erweiterungsabschnitt endseitig des bügelartigen Elements und ein zweiter Erweiterungsabschnitt in einem mittleren Bereich des bügelartigen Elements angeordnet ist. Auf diese Weise sind alle notwendigen Funktionselemente an einem einstückig ausgebildeten bügelartigen Element integrierbar.

Zweckmäßigerweise wirkt ein Ansteuerungsmodul auf den zweiten Erweiterungsabschnitt und auf ein vom ersten Erweiterungsabschnitt abgewandtes Ende des bügelartigen Elements ein.

Besonders bevorzugt ist am als Drehachse ausgebildeten ersten Erweiterungsabschnitt des bügelartigen Elements ein Rollenelement angeordnet. Dies ermöglicht eine reibungsminimierte Bewegung des bügelartigen Elements entlang des Führungsabschnitts der Führungsleiste.

Erfindungsgemäß weist das bügelartige Element oberseitig eine bevorzugt verrundet oder halbrund ausgebildete Vertiefung auf, welche korrespondierend zu einem herkömmlichen Auslösebügel eines Verriegelungselements des Schienensystems ausgebildet ist, wobei der Auslösebügel in der Vertiefung des bügelartigen Elements zumindest abschnittweise stoffschlüssig angeordnet ist.

Beim Verfahren zum Betrieb einer Entriegelungsvorrichtung wird erfindungsgemäß während der Bedienung der Einstiegserleichterungsfunktionalität das Schienensystem mittels eines Betätigungszuges entriegelt wird, welcher auf ein Ansteuerungsmodul einwirkt, welches auf ein bügelartiges Element und zumindest ein Verriegelungselement einwirkt, wobei das bügelartige Element derart geschwenkt wird, dass ein erster Erweiterungsabschnitt des bügelartigen Elements mit einem Rollenelement unterhalb eines Führungsabschnitts angeordnet wird.

Im Verlauf einer Betätigung der Einstiegserleichterungsfunktionalität und insbesondere im Verlauf einer daraus resultierenden Bewegung des Fahrzeugsitzes in Längsrichtung in eine den Einstieg von Fahrzeuginsassen erleichternde Position bildet das bügelartige Element, insbesondere dessen erster Erweiterungsabschnitt mit dem Rollenelement, zumindest abschnittsweise einen form- und/oder kraftschlüssigen Eingriff mit einer Führungsleiste, insbesondere deren Führungsabschnitt, derart aus, dass der Auslösebügel der Einstiegserleichterungsfunktionalität entgegen einer diesem zugeordneten Rückstellfeder unabhängig von einer Lehnenneigung einer Sitzlehne des Fahrzeugsitzes in einer entriegelten Position gehalten wird, wobei der erste Erweiterungsabschnitt des bügelartigen Elements mit dem Rollenelement hinterschneidend an der Unterseite des Führungsabschnitts angeordnet wird und entlang einer Unterseite des Führungsabschnitts bewegbar ist.

Anhand der beigefügten schematischen Figuren wird die Erfindung näher erläutert.

Dabei zeigen:
- Figur 1: schematisch eine perspektivische Darstellung einer Entriegelungsvorrichtung für einen Fahrzeugsitz mit Einstiegserleichterungsfunktionalität in verriegeltem Zustand des Schienensystems,
- Figur 2: schematisch eine perspektivische Darstellung einer Entriegelungsvorrichtung für einen Fahrzeugsitz mit Einstiegserleichterungsfunktionalität in entriegeltem Zustand des Schienensystems,
- Figur 3: schematisch eine perspektivische Darstellung einer Entriegelungsvorrichtung für einen Fahrzeugsitz mit Einstiegserleichterungsfunktionalität in entriegeltem Zustand des Schienensystems in einer den Einstieg von Fahrzeuginsassen erleichternden Position,
- Figur 4: schematisch eine Stirnansicht einer Entriegelungsvorrichtung für einen Fahrzeugsitz mit Einstiegserleichterungsfunktionalität in entriegeltem Zustand des Schienensystems,
- Figur 5: schematisch eine perspektivische Darstellung eines Schienensystems für einen Fahrzeugsitz mit Einstiegserleichterungsfunktionalität,
- Figur 6: schematisch eine perspektivische Darstellung einer Schiene eines Schienensystems für einen Fahrzeugsitz mit Einstiegserleichterungsfunktionalität in verriegeltem Zustand,
- Figur 7: schematisch eine perspektivische Darstellung einer Schiene eines Schienensystems für einen Fahrzeugsitz mit Einstiegserleichterungsfunktionalität in entriegeltem Zustand,
- Figur 8: schematisch eine perspektivische Darstellung einer Schiene eines Schienensystems für einen Fahrzeugsitz mit Einstiegserleichterungsfunktionalität in entriegeltem Zustand in einer den Einstieg von Fahrzeuginsassen erleichternden Position,
- Figur 9: schematisch eine weitere perspektivische Darstellung einer Schiene eines Schienensystems für einen Fahrzeugsitz mit Einstiegserleichterungsfunktionalität in entriegeltem Zustand in einer den Einstieg von Fahrzeuginsassen erleichternden Position,
- Figur 10: schematisch eine Stirnansicht einer Entriegelungsvorrichtung für einen Fahrzeugsitz mit Einstiegserleichterungsfunktionalität in entriegeltem Zustand des Schienensystems,
- Figur 11: schematisch eine perspektivische Teilschnittdarstellung einer Schiene eines Schienensystems für einen Fahrzeugsitz mit Einstiegserleichterungsfunktionalität in entriegeltem Zustand,
- Figur 12: schematisch eine perspektivische Teilschnittdarstellung einer Schiene eines Schienensystems für einen Fahrzeugsitz mit Einstiegserleichterungsfunktionalität in verriegeltem Zustand und
- Figur 13: schematisch eine perspektivische Darstellung eines bügelartigen Elements der Entriegelungsvorrichtung.

Einander entsprechende Teile sind in allen Figuren mit den gleichen Bezugszeichen versehen.

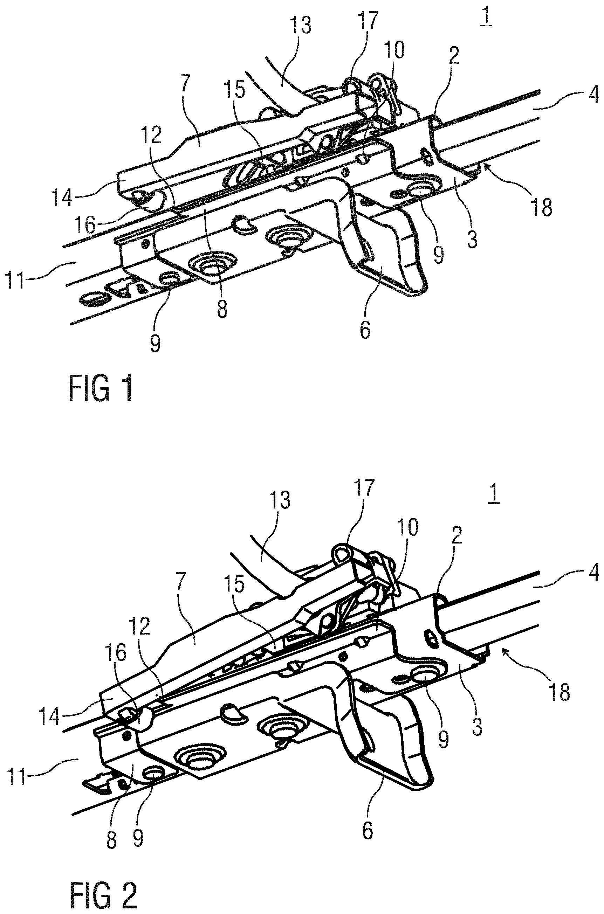

Figur 1 zeigt schematisch eine perspektivische Darstellung einer Entriegelungsvorrichtung 1 für einen nicht näher dargestellten Fahrzeugsitz mit Einstiegserleichterungsfunktionalität in verriegeltem Zustand eines Schienensystems 2.

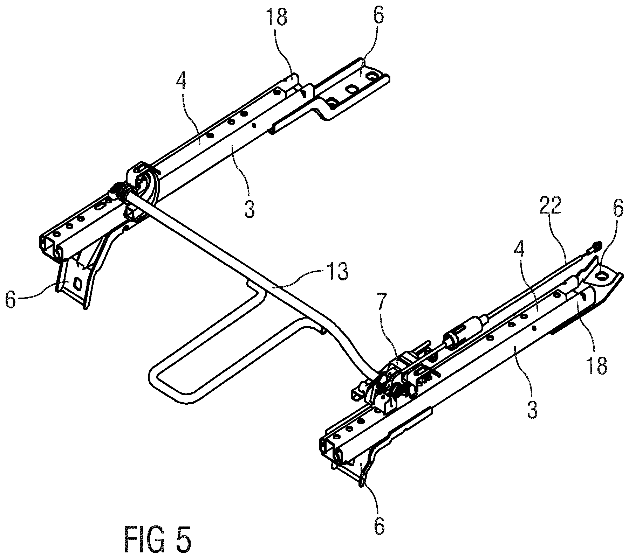

Ein solches Schienensystem 2 ist als herkömmliches Schienensystem ausgebildet und umfasst, wie in Figur 5 dargestellt, zwei einzelne Schienen 18, welche bevorzugt in Fahrtrichtung beidseitig im Fahrzeug und am Fahrzeugsitz angeordnet sind. Dabei umfasst jede Schiene 18 eine Unterschiene 3 und eine Oberschiene 4.

In Betriebsposition des Schienensystems 2 ist die Oberschiene 4 längsverschiebbar zumindest bereichsweise in der Unterschiene 3 angeordnet.

Am Schienensystem 2 sind in herkömmlicher Art und Weise Verriegelungselemente 5 angeordnet, welche in verriegeltem Zustand eine Relativbewegung zwischen Unterschiene 3 und Oberschiene 4 verhindern und in entriegeltem Zustand eine Relativbewegung zwischen Unterschiene 3 und Oberschiene 4 in Längsrichtung ermöglichen.

Die Unterschiene 3 ist in herkömmlicher und nicht dargestellter Weise mittels entsprechender Befestigungsabschnitte 6 an einem Fahrzeugboden eines Fahrzeugs befestigt und vorzugsweise in Längsrichtung des Fahrzeugs ausgerichtet.

An der Oberschiene 4 ist ein herkömmlicher Fahrzeugsitz angeordnet, welcher eine Einstiegserleichterungsfunktionalität aufweist. Ein solcher Fahrzeugsitz oder dessen Sitzlehne ist zur Ein- und Ausstiegserleichterung der hinteren Fahrzeuginsassen um eine Schwenkachse in Fahrtrichtung nach vorne schwenkbar, wobei der Fahrzeugsitz mittels des Schienensystems 2 in eine den Einstieg von Fahrzeuginsassen erleichternde Position, insbesondere in Fahrtrichtung vorwärts, verschiebbar ist.

Die Entriegelungsvorrichtung 1 kann am Schienensystem 2 angeordnet oder in das Schienensystem 2 integriert sein.

Mittels der Entriegelungsvorrichtung 1 ist eine Entriegelung des Schienensystems 2 unabhängig von einer Lehnenposition und/oder einer Lehnenneigung einer Sitzlehne des Fahrzeugsitzes ermöglicht.

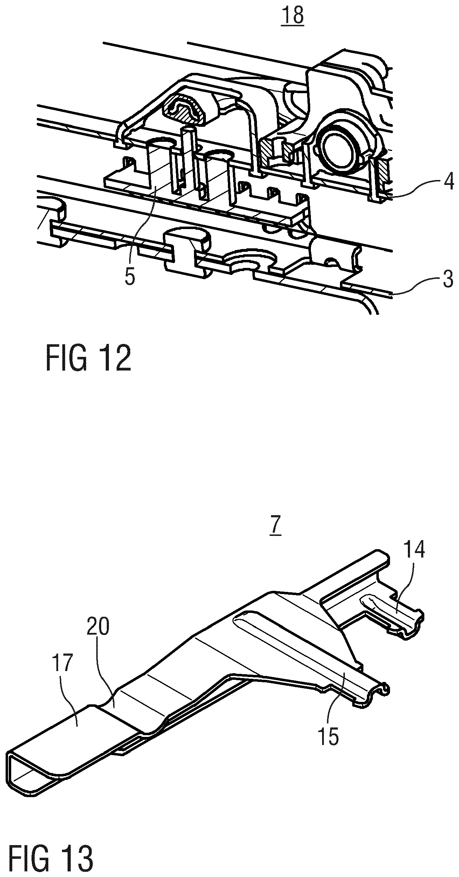

Die Entriegelungsvorrichtung 1 für einen Fahrzeugsitz mit Einstiegserleichterungsfunktionalität umfasst zumindest ein in Figur 13 näher dargestelltes bügelartiges Element 7, eine Führungsleiste 8 und ein Ansteuerungsmodul 19.

Das Ansteuerungsmodul 19 ist mittels eines entsprechend ausgeformten Koppelabschnitts 21 mit einem herkömmlichen Betätigungszug 22 der Einstiegserleichterungsfunktionalität gekoppelt.

Die Führungsleiste 8 ist mittels entsprechender Befestigungsmittel 9, beispielsweise Nieten, an der Unterschiene 3 des Schienensystems 2 zur Sitzlängsverstellung angeordnet. Die Führungsleiste 8 ist bevorzugt als mehrfach abgewinkeltes und abschnittsweise korrespondierend zur Unterschiene 3 ausgeformtes Blechprägeteil ausgebildet. Dabei weist die Führungsleiste 8 einen Führungsabschnitt 10 auf, welcher von einer Seitenfläche 11 der Unterschiene 3 abgewinkelt an selbiger angeordnet ist.

Ein erstes Ende 12 des Führungsabschnitts 10 ist bevorzugt verrundet ausgebildet.

Das bügelartige Element 7, welches in Figur 13 näher dargestellt ist, weist einen zumindest abschnittsweise u-förmigen Querschnitt auf, wobei ein erster Erweiterungsabschnitt 14 endseitig des bügelartigen Elements 7 und ein zweiter Erweiterungsabschnitt 15 in einem mittleren Bereich des bügelartigen Elements 7 angeordnet sind.

Dabei ist der zweite Erweiterungsabschnitt 15 als Betätigungsabschnitt ausgebildet, auf welchen das Ansteuerungsmodul 19 zumindest abschnittsweise einwirkt.

Das bügelartige Element 7 weist oberseitig eine bevorzugt verrundet oder halbrund ausgebildete Vertiefung 20 auf, welche korrespondierend zu einem herkömmlichen Auslösebügel 13 eines Verriegelungselements 5 des Schienensystems 2 ausgebildet ist. Dabei ist der Auslösebügel 13 in der Vertiefung 20 des bügelartigen Elements 7 stoffschlüssig angeordnet, bevorzugt verschweißt.

Am als Drehachse ausgebildeten ersten Erweiterungsabschnitt 14 ist ein Rollenelement 16 angeordnet.

Das bügelartige Element 7 ist mit seinem vom ersten Erweiterungsabschnitt 14 abgewandten Ende 17 mit dem Ansteuerungsmodul 19 der Einstiegserleichterungsfunktionalität gekoppelt.

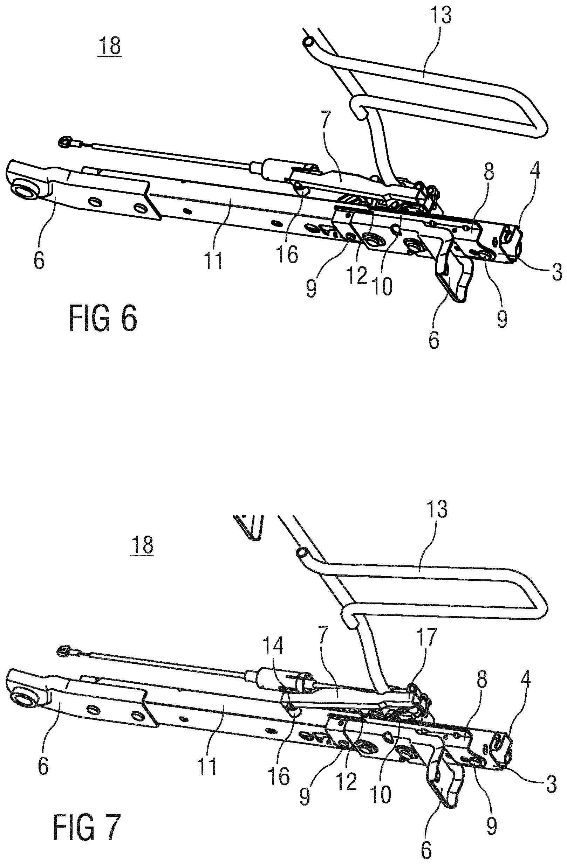

Figur 6 zeigt schematisch eine perspektivische Darstellung einer Schiene 18 des Schienensystems 2 für einen Fahrzeugsitz mit Einstiegserleichterungsfunktionalität in verriegeltem Zustand, in welchem der Auslösebügel 13 unbetätigt ist. Dabei ist der erste Erweiterungsabschnitt 14 mit dem Rollenelement 16 oberhalb des Führungsabschnitts 10 angeordnet.

Figur 12 zeigt schematisch eine perspektivische Teilschnittdarstellung einer Schiene 18 des Schienensystems 2 für einen Fahrzeugsitz mit Einstiegserleichterungsfunktionalität in verriegeltem Zustand des Verriegelungselements 5.

Figur 2 zeigt schematisch eine perspektivische Darstellung der Entriegelungsvorrichtung 1 für einen Fahrzeugsitz mit Einstiegserleichterungsfunktionalität in entriegeltem Zustand des Schienensystems 2.

Figur 7 zeigt schematisch eine perspektivische Darstellung einer Schiene 18 des Schienensystems 2 für einen Fahrzeugsitz mit Einstiegserleichterungsfunktionalität in entriegeltem Zustand.

Während der Bedienung der Einstiegserleichterungsfunktionalität wird die Sitzlehne vorgeschwenkt, wobei der Betätigungszug 22 das Ansteuerungsmodul 19 aktuiert. Diese Aktuierung erfolgt derart, dass das Ansteuerungsmodul 19 auf das bügelartige Element 7 einwirkt und eine Schwenkbewegung an diesem aktuiert, durch welche der mit dem bügelartigen Element 7 drehfest gekoppelte Auslösebügel 13 eine Schwenkbewegung vollführt.

Durch diese Schwenkbewegung wird das Schienensystem 2 mittels des Auslösebügels 13 entriegelt, welcher auf zumindest ein Verriegelungselement 5 einwirkt. Dabei wird das bügelartige Element 7 derart mit dem Auslösebügel 13 geschwenkt, dass der erste Erweiterungsabschnitt 14 mit dem Rollenelement 16 unterhalb des Führungsabschnitts 10 angeordnet ist.

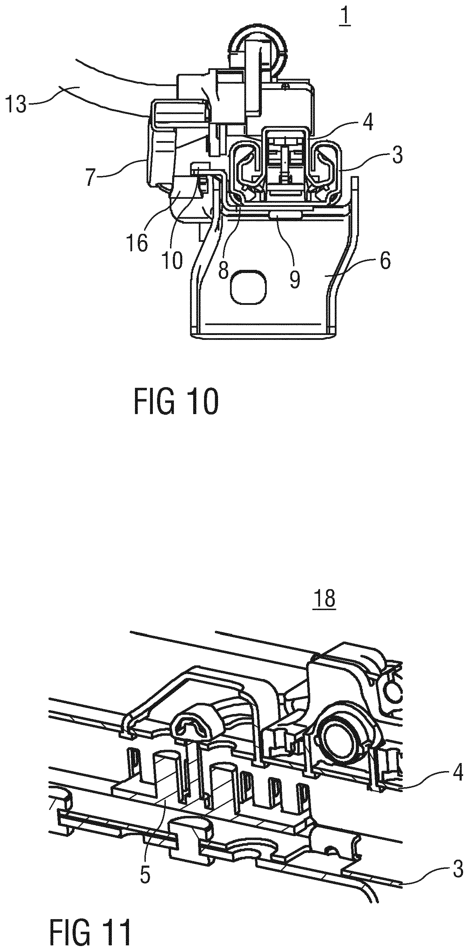

Weiterhin wird das Verriegelungselement 5, beispielsweise eine herkömmliche Rastplatte, derart aktuiert, dass sich das Schienensystem 2, wie in Figur 11 dargestellt, in einem entriegelten Zustand befindet.

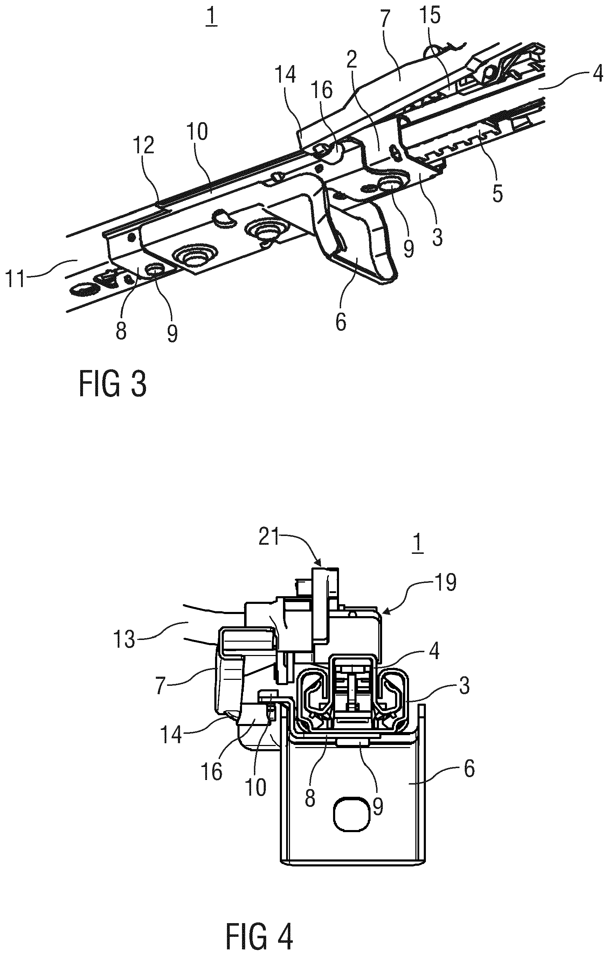

Figur 3 zeigt schematisch eine perspektivische Darstellung der Entriegelungsvorrichtung 1 für einen Fahrzeugsitz mit Einstiegserleichterungsfunktionalität in entriegeltem Zustand des Schienensystems 2 in einer den Einstieg von Fahrzeuginsassen erleichternden, vorverlagerten Position.

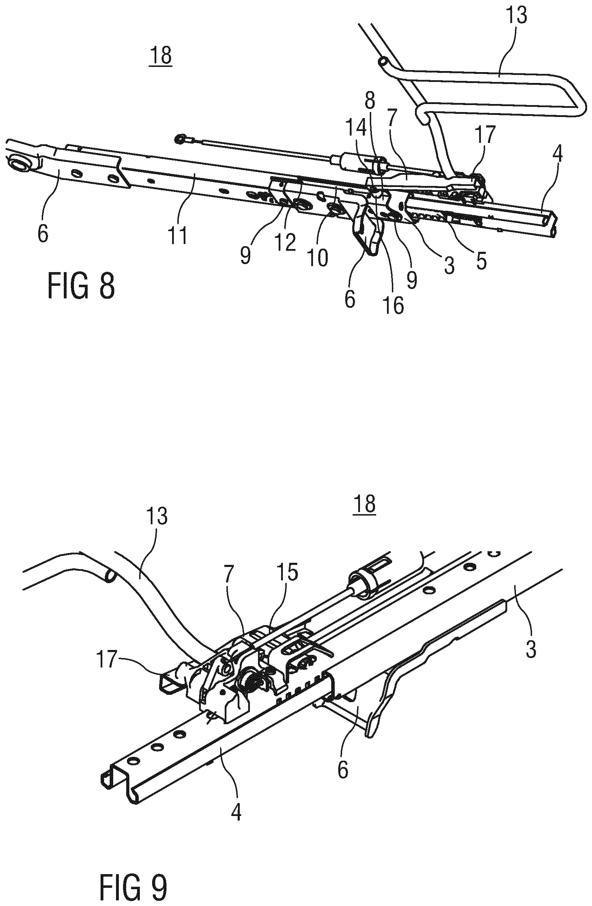

Figur 8 zeigt schematisch eine perspektivische Darstellung einer Schiene 18 eines Schienensystems 2 für einen Fahrzeugsitz mit Einstiegserleichterungsfunktionalität in entriegeltem Zustand in einer den Einstieg von Fahrzeuginsassen erleichternden, vorverlagerten Position.

Figur 9 zeigt schematisch eine weitere perspektivische Darstellung einer Schiene 18 eines Schienensystems 2 für einen Fahrzeugsitz mit Einstiegserleichterungsfunktionalität in entriegeltem Zustand in einer den Einstieg von Fahrzeuginsassen erleichternden, vorverlagerten Position aus einem veränderten Betrachtungswinkel.

Im Verlauf einer Betätigung der Einstiegserleichterungsfunktionalität und insbesondere im Verlauf einer daraus resultierenden Bewegung des Fahrzeugsitzes in Längsrichtung in eine den Einstieg von Fahrzeuginsassen erleichternde Position bildet das bügelartige Element 7, insbesondere dessen erster Erweiterungsabschnitt 14 mit dem Rollenelement 16, zumindest abschnittsweise einen form- und/oder kraftschlüssigen Eingriff mit der Führungsleiste 8, insbesondere deren Führungsabschnitt 10, derart aus, dass der Auslösebügel 13 der Einstiegserleichterungsfunktionalität entgegen einer diesem zugeordneten, nicht dargestellten Rückstellfeder in einer entriegelten Position gehalten ist. Dabei ist der erste Erweiterungsabschnitt 14 mit dem Rollenelement 16 bevorzugt hinterschneidend an der Unterseite des Führungsabschnitts 10 angeordnet.

Während dieser hinterschneidenden Anordnung des ersten Erweiterungsabschnitts 14 mit dem Rollenelement 16 an der Unterseite des Führungsabschnitts 10 wird das Schienensystem 2 unabhängig von einer Lehnenneigung der Sitzlehne des Fahrzeugsitzes im entriegelten Zustand gehalten.

Dabei ist der erste Erweiterungsabschnitt 14 mit dem Rollenelement 16 entlang einer Unterseite des Führungsabschnitts 10 bewegbar. Weiterhin ist durch die kraft- und/oder formschlüssige Verbindung zwischen erstem Erweiterungsabschnitt 14 mit dem Rollenelement 16 und dem Führungsabschnitt 10 ein Zurückschwenken des bügelartigen Elements 7 und des Auslösebügels 13 und ein daraus resultierendes Verriegeln des Schienensystems 2 verhindert.

Dabei ist diese Entriegelung von einer Position von Oberschiene 4 zu Unterschiene 3 abhängig.

Figur 4 zeigt schematisch eine Stirnansicht der Entriegelungsvorrichtung 1 für einen Fahrzeugsitz mit Einstiegserleichterungsfunktionalität in entriegeltem Zustand des Schienensystems 2.

Figur 10 zeigt schematisch eine weitere Stirnansicht der Entriegelungsvorrichtung 1 für einen Fahrzeugsitz mit Einstiegserleichterungsfunktionalität in entriegeltem Zustand des Schienensystems 2.

### Bezugszeichenliste

- 1: Entriegelungsvorrichtung
- 2: Schienensystem
- 3: Unterschiene
- 4: Oberschiene
- 5: Verriegelungselement
- 6: Befestigungsabschnitt
- 7: bügelartiges Element
- 8: Führungsleiste
- 9: Befestigungsmittel
- 10: Führungsabschnitt
- 11: Seitenfläche
- 12: erstes Ende
- 13: Auslösebügel
- 14: erster Erweiterungsabschnitt
- 15: zweiter Erweiterungsabschnitt
- 16: Rollenelement
- 17: Ende
- 18: Schiene
- 19: Ansteuerungsmodul
- 20: Vertiefung
- 21: Koppelabschnitt
- 22: Betätigungszug

## Patentansprüche

1. Entriegelungsvorrichtung (1) für einen Fahrzeugsitz mit Einstiegserleichterungsfunktionalität, umfassend ein bügelartiges Element (7) und eine Führungsleiste (8), wobei die Führungsleiste (8) mittels zumindest eines Befestigungsmittels (9) an einer Unterschiene (3) eines Schienensystems (2) zur Sitzlängsverstellung angeordnet ist und das bügelartige Element (7) mit einem Auslösebügel (13) für die Einstiegserleichterungsfunktionalität gekoppelt ist, wobei im Verlauf einer Betätigung der Einstiegserleichterungsfunktionalität das bügelartige Element (7) zumindest abschnittsweise einen form- und/oder kraftschlüssigen Eingriff mit der Führungsleiste (8) derart ausbildet, dass der Auslösebügel (13) der Einstiegserleichterungsfunktionalität entgegen einer diesem zugeordneten Rückstellfeder in einer entriegelten Position gehalten ist,
**dadurch gekennzeichnet, dass** das bügelartige Element (7) oberseitig eine bevorzugt verrundet oder halbrund ausgebildete Vertiefung (20) aufweist, welche korrespondierend zu dem herkömmlichen Auslösebügel (13) eines Verriegelungselements (5) des Schienensystems (2) ausgebildet ist, wobei der Auslösebügel (13) in der Vertiefung (20) des bügelartigen Elements (7) zumindest abschnittweise stoffschlüssig angeordnet ist.

2. Entriegelungsvorrichtung (1) nach Anspruch 1,
**dadurch gekennzeichnet, dass** die Führungsleiste (8) als mehrfach abgewinkeltes und abschnittsweise korrespondierend zur Unterschiene (3) ausgeformtes Blechprägeteil ausgebildet ist.

3. Entriegelungsvorrichtung (1) nach Anspruch 1 oder 2,
**dadurch gekennzeichnet, dass** die Führungsleiste (8) zumindest einen Führungsabschnitt (10) aufweist, welcher von einer Seitenfläche (11) der Unterschiene (3) abgewinkelt an selbiger angeordnet ist.

4. Entriegelungsvorrichtung (1) nach Anspruch 3,
**dadurch gekennzeichnet, dass** ein erstes Ende (12) des Führungsabschnitts (10) verrundet ausgebildet ist.

5. Entriegelungsvorrichtung (1) nach Anspruch 1,
**dadurch gekennzeichnet, dass** das bügelartige Element (7) einen zumindest abschnittsweise u-förmigen Querschnitt aufweist, wobei ein erster Erweiterungsabschnitt (14) endseitig des bügelartigen Elements (7) und ein zweiter Erweiterungsabschnitt (15) in einem mittleren Bereich des bügelartigen Elements (7) angeordnet sind.

6. Entriegelungsvorrichtung (1) nach Anspruch 5,
**dadurch gekennzeichnet, dass** ein Ansteuerungsmodul (19) auf den zweiten Erweiterungsabschnitt (15) und auf ein vom ersten Erweiterungsabschnitt (14) abgewandtes Ende (17) des bügelartigen Elements (7) einwirkt.

7. Entriegelungsvorrichtung (1) nach Anspruch 5,
**dadurch gekennzeichnet, dass** am als Drehachse ausgebildeten ersten Erweiterungsabschnitt (14) des bügelartigen Elements (7) ein Rollenelement (16) angeordnet ist.

8. Verfahren zum Betrieb einer Entriegelungsvorrichtung (1) nach einem der vorherigen Ansprüche,
**dadurch gekennzeichnet, dass** während der Bedienung der Einstiegserleichterungsfunktionalität ein Schienensystem (2) mittels eines Betätigungszuges (22) entriegelt wird, welcher auf ein Ansteuerungsmodul (19) einwirkt, welches auf ein bügelartiges Element (7) und zumindest ein Verriegelungselement (5) einwirkt, wobei das bügelartige Element (7) derart geschwenkt wird, dass ein erster Erweiterungsabschnitt (14) des bügelartigen Elements (7) mit einem Rollenelement (16) unterhalb eines Führungsabschnitts (10) angeordnet wird.

9. Verfahren nach Anspruch 8,
**dadurch gekennzeichnet, dass** im Verlauf einer Betätigung der Einstiegserleichterungsfunktionalität und insbesondere im Verlauf einer daraus resultierenden Bewegung des Fahrzeugsitzes in Längsrichtung in eine den Einstieg von Fahrzeuginsassen erleichternde Position das bügelartige Element (7), insbesondere dessen erster Erweiterungsabschnitt (14) mit dem Rollenelement (16), zumindest abschnittsweise einen form- und/oder kraftschlüssigen Eingriff mit einer Führungsleiste (8), insbesondere deren Führungsabschnitt (10), derart ausbildet, dass der Auslösebügel (13) der Einstiegserleichterungsfunktionalität entgegen einer diesem zugeordneten Rückstellfeder unabhängig von einer Lehnenneigung einer Sitzlehne des Fahrzeugsitzes in einer entriegelten Position gehalten ist, wobei der erste Erweiterungsabschnitt (14) des bügelartigen Elements (7) mit dem Rollenelement (16) hinterschneidend an der Unterseite des Führungsabschnitts (10) angeordnet wird und entlang einer Unterseite des Führungsabschnitts (10) bewegbar ist.

## Claims

1. Unlocking device (1) for a vehicle seat with an entry facilitation function, comprising a bracket-like element (7) and a guide bar (8), wherein the guide bar (8) is arranged by means of at least one fastening means (9) on a lower rail (3) of a rail system (2) for longitudinal adjustment of the seat and the bracket-like element (7) is coupled to a release lever (13) for the entry facilitation function, wherein during an actuation of the entry facilitation function, the bracket-like element (7) forms at least partially a positive and/or non-positive engagement with the guide bar (8) such that the release lever (13) of the entry facilitation function is held in an unlocked position counter to a restoring spring associated therewith, **characterized in that** the bracket-like element (7) on the upper face has a recess (20), preferably of rounded or semi-rounded configuration, said recess being configured so as to correspond to the conventional release lever (13) of a locking element (5) of the rail system (2), wherein the release lever (13) is arranged in the recess (20) of the bracket-like element (7) at least partially by a material connection.

2. Unlocking device (1) according to Claim 1, **characterized in that** the guide bar (8) is configured as a stamped sheet metal part which has been bent back several times and shaped so as to correspond partially with the lower rail (3).

3. Unlocking device (1) according to Claim 1 or 2, **characterized in that** the guide bar (8) has at least one guide portion (10) which is bent back from a side surface (11) of the lower rail (3) and arranged thereon.

4. Unlocking device (1) according to Claim 3, **characterized in that** a first end (12) of the guide portion (10) is of rounded configuration.

5. Unlocking device (1) according to Claim 1, **characterized in that** the bracket-like element (7) has an at least partially U-shaped cross section, wherein a first widened portion (14) is arranged at the end of the bracket-like element (7) and a second widened portion (15) is arranged in a central region of the bracket-like element (7).

6. Unlocking device (1) according to Claim 5, **characterized in that** a control module (19) acts on the second widened portion (15) and on an end (17) of the bracket-like element (7) remote from the first widened portion (14).

7. Unlocking device (1) according to Claim 5, **characterized in that** a roller element (16) is arranged on the first widened portion (14) of the bracket-like element (7) configured as a pivot.

8. Method for operating an unlocking device (1) according to one of the preceding claims, **characterized in that** during the operation of the entry facilitation function a rail system (2) is unlocked by means of an actuating cable (22) which acts on a control module (19) which acts on a bracket-like element (7) and at least one locking element (5), wherein the bracket-like element (7) is pivoted such that a first widened portion (14) of the bracket-like element (7) is arranged with a roller element (16) below a guide portion (10).

9. Method according to Claim 8, **characterized in that** during an actuation of the entry facilitation function and, in particular, during a resulting movement of the vehicle seat in the longitudinal direction into a position facilitating the entry of vehicle occupants, the bracket-like element (7), in particular the first widened portion (14) thereof with the roller element (16), forms at least partially a positive and/or non-positive engagement with a guide bar (8), in particular the guide portion (10) thereof, such that the release lever (13) of the entry facilitation function is held in an unlocked position counter to a restoring spring associated therewith, independently of a backrest inclination of a seat backrest of the vehicle seat, wherein the first widened portion (14) of the bracket-like element (7) with the roller element (16) is arranged in the manner of an undercut on the lower face of the guide portion (10) and is able to be moved along a lower face of the guide portion (10).

## Revendications

1. Dispositif de déverrouillage (1) pour un siège de véhicule présentant une fonctionnalité pour faciliter l'entrée, comportant un élément (7) de type étrier et une barre de guidage (8), la barre de guidage (8) étant disposée, au moyen d'au moins un moyen de fixation (9), sur un rail inférieur (3) d'un système de rails (2) pour le réglage longitudinal du siège, et l'élément (7) de type étrier étant accouplé à un étrier de déclenchement (13) pour la fonctionnalité pour faciliter l'entrée, l'élément (7) de type étrier réalisant au moins dans certaines zones un engagement par complémentarité de forme et/ou à force avec la barre de guidage (8) au cours d'un actionnement de la fonctionnalité pour faciliter l'entrée, de telle sorte que l'étrier de déclenchement (13) de la fonctionnalité pour faciliter l'entrée soit retenu dans une position déverrouillée à l'encontre d'un ressort de rappel associé à celui-ci,
**caractérisé en ce que** l'élément (7) de type étrier présente, du côté supérieur, un évidement (20) formé de préférence de manière arrondie ou semi-circulaire, lequel est formé de manière à correspondre à l'étrier de déclenchement (13) classique d'un élément de verrouillage (5) du système de rails (2), l'étrier de déclenchement (13) étant disposé dans l'évidement (20) de l'élément (7) de type étrier avec liaison de matière au moins dans certaines zones.

2. Dispositif de déverrouillage (1) selon la revendication 1,
**caractérisé en ce que** la barre de guidage (8) est réalisée sous forme de pièce estampée en tôle coudée plusieurs fois et façonnée dans certaines zones de manière à correspondre au rail inférieur (3) .

3. Dispositif de déverrouillage (1) selon la revendication 1 ou 2,
**caractérisé en ce que** la barre de guidage (8) comprend au moins une partie de guidage (10), laquelle est coudée à partir d'une surface latérale (11) du rail inférieur (3) et est disposée sur celui-ci.

4. Dispositif de déverrouillage (1) selon la revendication 3,
**caractérisé en ce qu'**une première extrémité (12) de la partie de guidage (10) est formée de manière arrondie.

5. Dispositif de déverrouillage (1) selon la revendication 1,
**caractérisé en ce que** l'élément (7) de type étrier présente une section transversale en forme de U au moins dans certaines zones, une première partie d'élargissement (14) étant disposée à une extrémité de l'élément (7) de type étrier et une deuxième partie d'élargissement (15) étant disposée dans une région centrale de l'élément (7) de type étrier.

6. Dispositif de déverrouillage (1) selon la revendication 5,
**caractérisé en ce qu'**un module de commande (19) agit sur la deuxième partie d'élargissement (15) et sur une extrémité (17), opposée à la première partie d'élargissement (14), de l'élément (7) de type étrier.

7. Dispositif de déverrouillage (1) selon la revendication 5,
**caractérisé en ce qu'**un élément galet (16) est disposé sur la première partie d'élargissement (14), réalisée sous forme d'axe de rotation, de l'élément (7) de type étrier.

8. Procédé permettant de faire fonctionner un dispositif de déverrouillage (1) selon l'une quelconque des revendications précédentes,
**caractérisé en ce que**, pendant la commande de la fonctionnalité pour faciliter l'entrée, un système de rails (2) est déverrouillé au moyen d'un câble d'actionnement (22), lequel agit sur un module de commande (19), lequel agit sur un élément (7) de type étrier et au moins un élément de verrouillage (5), l'élément (7) de type étrier étant pivoté de telle sorte qu'une première partie d'élargissement (14) de l'élément (7) de type étrier dotée d'un élément galet (16) soit disposée en dessous d'une partie de guidage (10).

9. Procédé selon la revendication 8,
**caractérisé en ce qu'**au cours d'un actionnement de la fonctionnalité pour faciliter l'entrée et en particulier au cours d'un déplacement en résultant du siège de véhicule dans la direction longitudinale dans une position facilitant l'entrée d'occupants du véhicule, l'élément (7) de type étrier, en particulier sa première partie d'élargissement (14) dotée de l'élément galet (16), réalise au moins dans certaines zones un engagement par complémentarité de forme et/ou à force avec une barre de guidage (8), en particulier avec sa partie de guidage (10), de telle sorte que l'étrier de déclenchement (13) de la fonctionnalité pour faciliter l'entrée soit retenu dans une position déverrouillée à l'encontre d'un ressort de rappel associé à celui-ci, indépendamment d'une inclinaison d'un dossier du siège de véhicule, la première partie d'élargissement (14) de l'élément (7) de type étrier dotée de l'élément galet (16) étant disposée à la manière d'une contre-dépouille sur le côté inférieur de la partie de guidage (10) et étant déplaçable le long d'un côté inférieur de la partie de guidage (10).
